# EUROPEAN PATENT APPLICATION

(11) **EP 2 450 529 A1**
(43) Date of publication of application: **09.05.2012**
(21) Application number: 10793648.6
(22) Date of filing: 01.07.2010
(51) Int. Cl.: F01C 1/14, F04C 2/14

(54) **PERIPHERAL PUMP-TURBINE**

(30) Priority: 01.07.2009 ES 200930398
(71) Applicant: Pozo Fernandez, Jose, 28002 Madrid (ES)
(72) Inventor: Pozo Fernandez, Jose, 28002 Madrid (ES)
(74) Representative: Carpintero Lopez, Francisco
(86) International application number: PCT/ES2010/070453
(87) International publication number: WO 2011/000996

(57) **Abstract**

The present invention relates to a peripheral pump-turbine comprising two wheels (2) meshed with one another, laterally incorporating two or more blades (3) fitting in matching recesses (4) intercalated between said blades (3), being housed in a casing (5) provided with fluid intake and discharge openings (6). If the fluid is oil, the wheels (2) incorporate teeth (10) arranged between the blades (3) and the recesses (4) to allow the meshing thereof, if the fluid is water, the wheels (2) mesh by means of pinions (11) integrally coupled to the shafts (9) thereof in the outer portion of the casing (5).

## Description

### Technical Field of the Invention

As stated by the title of the present specification, the invention relates to a peripheral pump-turbine providing significant advantages and novelty features to the intended function with respect to other similar devices, mechanisms and systems currently known on the market.

More particularly, the object of the invention focuses on a fluid driving mechanism formed by two wheels with blades that rotate in a meshed manner, the mechanism is at the same time a peripheral turbine and pump, since, depending on the rotation direction of said wheels, the mechanism acts as a pump or a turbine where appropriate, integrating both types of machine in one and the same mechanism.

The field of application of the present invention is encompassed within the technical sector of the industry dedicated to manufacturing hydraulic turbines and pumps.

### Background of the Invention

Today and as a reference to the state of the art, it must be highlighted that, although there are several types of turbines and pumps of the type regarded herein on the market, the applicant is unaware of the existence of any other invention having the technical, structural and constitutive features of the one proposed herein.

In this sense it must be highlighted that, although the proposed mechanism has two toothed wheels meshed with one another inside a casing which is similar to the peripheral pumps of the positive rotary type where the pinions peripherally drive the fluid, the difference lies in the fact that in the proposed mechanism the wheels use the gears so that one of the wheels moves the other in a synchronized manner and drive is achieved with the blades provided therein by means of the defined and mentioned dimensions of the fluid intake and discharge cavities, in addition to rendering its enveloping casing with a great simplicity.

The operation of a hydraulic machine which purpose is to pump or harness a fluid is very well known;
- the purpose of a pumping process is to increase the pressure of a liquid by adding energy to the hydraulic system, to move the fluid from a low pressure or low altitude area to a high pressure or high altitude area,
- in contrast the harnessing process for harnessing a fluid relates to continuously passing a fluid through the hydraulic machine and the fluid delivers its energy through a runner with vanes or blades.

Various applications relating to hydraulic machines are known such as the patent application publication number US 2002061256 in which it describes a pair of wheels comprising blades which are coupled to recesses made on the wheels themselves; but drawbacks such as the complexity for designing and manufacturing the enveloping casing of said hydraulic machine, as well as a relatively small volume of intake and discharge flow limiting the use to small hydraulic installations are observed.

Another application belonging to the state of the art is the patent application publication number US 3574491 where two wheels comprise a pair of blades and a plurality of meshing teeth between both wheels, such that said teeth transmit the movement and the blades drive the fluid by way of a hydraulic pump; like in the application above, the casing enveloping the device has relatively small fluid inlets and outlets limiting the use of said device to relatively small volume of flow.

Like the two applications mentioned above, the United States application US 1382580 and the Spanish application ES 362473 have the same drawbacks described above.

Patent application publication number ES 2131706 describes a pair of meshed wheels and a series of measurements relating to the dimensions of the teeth, fillet radii, etc. of said meshed wheels which can comprise a series of blades acting as the drive in a pump type hydraulic machine, but said application does not describe the dimensions of the fluid intake and discharge cavities nor the shape of the casing enveloping said device; making it highly difficult to be put into service.

Finally, the United States application US-349270 describes a small pressure pump which also comprises a single piece outer casing provided to be capable of moving small volume of fluid flow.

Therefore, it is observed that, there are several drawbacks mainly relating to the use of pump-turbines of this type for installations needing to move large volume of flow, mainly in hydroelectric plants; since the main focus of the mentioned prior arts relate to small machines intended for moving small volumes of fluids.

### Description of the Invention

The hydraulic machine for pumping and harnessing a specific a fluid proposed by the invention solves the aforementioned drawback in a fully satisfactory manner, such that it simplifies the process of assembling and putting the invention itself into service in addition to having larger intake and discharge cavities than those used today, which allow moving a larger volume of water reducing times and improving the operation of the assembly.

Fluid is understood as liquid or gaseous fluid of any type, being able to be liquids such as water, oils or the like, to gases used in specific industries.

The peripheral pump-turbine proposed by the invention specifically consists of a mechanism made up of two wheels meshed with one another, such that one moves the other in a synchronized manner, the wheels laterally incorporate two or more blades fitting in matching holes arranged on their sides intercalated with the blades in said meshed rotation.

The possibility that the dimension of the openings is defined by a length calculated as the sum of the following is contemplated:
the horizontal projection of the distance between the centers of the wheels,
the product of the radius times the cosine of the semiangle formed by two consecutive blades of one of the wheels,
the product of the radius times the cosine of the semiangle formed by two consecutive blades of the other wheel.

Said dimensions are thus greater with respect to the known state of the art, such that they allow moving a high volume of liquid, improving the performance with respect to the other hydraulic turbo-pumps and even reducing the size thereof with respect to the known state of the art; more specifically the size of the openings of the intake and discharge cavities are the biggest possible, obtaining the maximum volume of fluid to be moved and being able to be used in several applications such as extinguishing fires at high altitudes or the like.

Likewise, machines of this type are preferably focused on moving high volumes of flow, such as for high power hydroelectric plants; due to the large volume which can circulate through said machine and mainly due to the dimensions mentioned above referring to the dimension of the intake and discharge openings.

It is observed that for wheels which comprise two blades and two recesses, respectively, the semiangle formed by two consecutive blades is a 90°- angle, therefore the calculated length of the openings being only the horizontal projection of the distance between the centers of the wheels.

In a preferred embodiment, the casing will be formed by two side covers partially covering the upper and lower portion of the wheels with blades, thus determining the fluid intake and discharge holes, and by two frontal covers through which the shafts of said wheels emerge and through which the movement is applied to one of them. It must be taken into account that the terms "upper", "lower", "side", "frontal", "front", "rear", etc., in this description are used with respect to the most common arrangements of the mechanisms of this type, i.e., with the shafts of the wheels arranged horizontally and at one and the same level.

Said wheels are housed inside a divided casing, respective fluid intake and discharge openings being provided in said casing.

It is observed that assembling said casing differs from the state of the art known until now, in the sense that two side covers are needed which upon being assembled define the fluid intake and discharge holes, without the need of making perforations or drill holes on a single cover as in the mentioned prior arts.

Once the two side covers are assembled, the two frontal covers are coupled, thus obtaining an easy-to-assemble and simple casing which does not need subsequent machining made up of the parts forming it, and additionally having a high dimensional precision in terms of the dimensions of the fluid intake and discharge openings.

It must be emphasized that in the mentioned prior arts pressure pumps or blowers which are capable of moving small volumes of fluid flow are described, therefore the enveloping casing is formed by means of a single part; but for the purpose of moving high volumes of flow like the object of the invention, it cannot be formed by single part; therefore the casing of the object of the invention is made such that its is divided into parts, and where the parts define the intake and discharge openings, being clearly differentiated from the state of the art known until now; making the forming process for use cheaper focusing on the movement of large volumes of flow.

Additionally, it is understood that the mechanism will act as a turbine or a pump according to how the wheels rotate and thereby the mentioned blades, in one direction or another.

It is important to point out that if the mentioned fluid to be driven is oil, the gear teeth of the wheels could be incorporated therein, arranged between the blades and the holes, being therefore inside the pumped oil. However, if the fluid to be driven is water, to prevent the gear teeth from seizing, these teeth will be incorporated in perfectly lubricated pinions located externally in the frontal or rear portion of the casing enclosed in a leak-tight chamber, being conveniently integrally coupled to the shafts of the wheels with blades.

Finally, it must be stated that the blades do not need to brush against the walls of the holes of the complementary wheel in which they fit upon rotating, since wear is prevented and the pumping of the fluid is correct by leaving a gap of several microns of clearance; in addition to cooling the machine object of the invention prolonging its service life due to the reduction of the working temperature of said machine.

The peripheral pump-turbine described represents an innovative structure having structural and constitutive features unknown until now for such purpose, reasons which together with the practical use thereof provide it with sufficient foundation for obtaining the privilege of exclusivity sought.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:

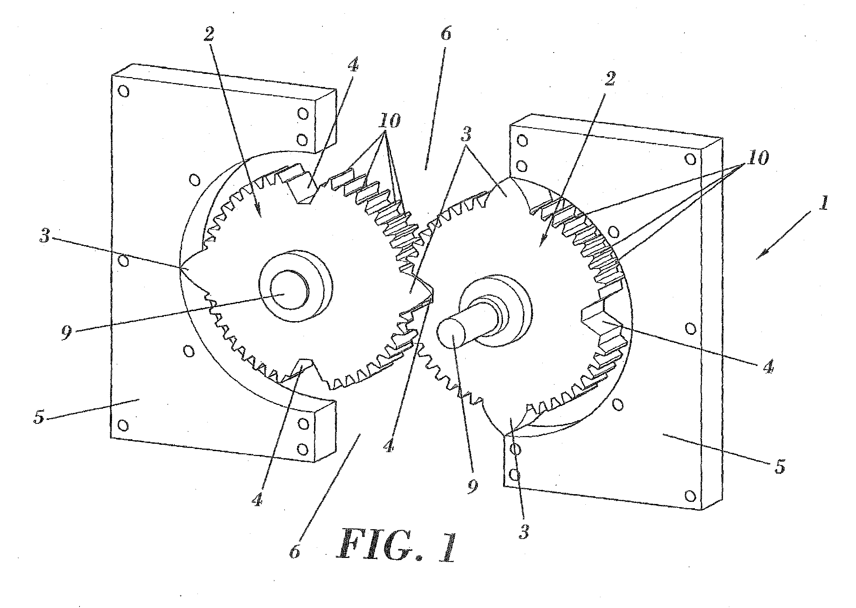

Figure 1 shows a schematic perspective view of an embodiment of the peripheral pump-turbine object of the invention, being depicted without the frontal portion of the casing or the rear portion to enable viewing the inside, in an embodiment with two blades and with teeth for meshing with the wheels themselves.

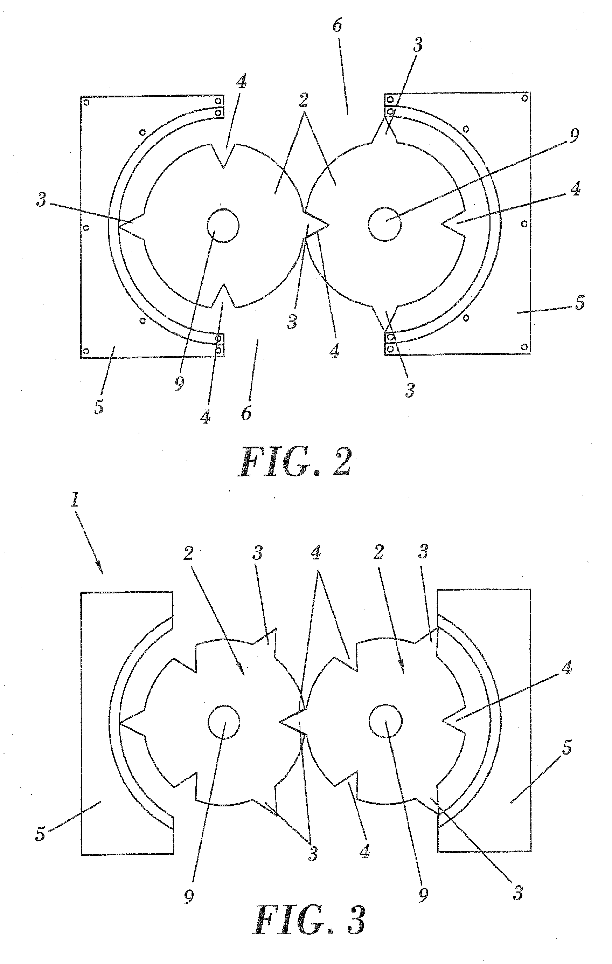

Figures 2 and 3 shows respective schematic cross-section views according to a side elevational section of respective embodiments of the peripheral pump-turbine according to the invention, in this case having two and three blades and without meshing with one another by means of pinions outside the casing.

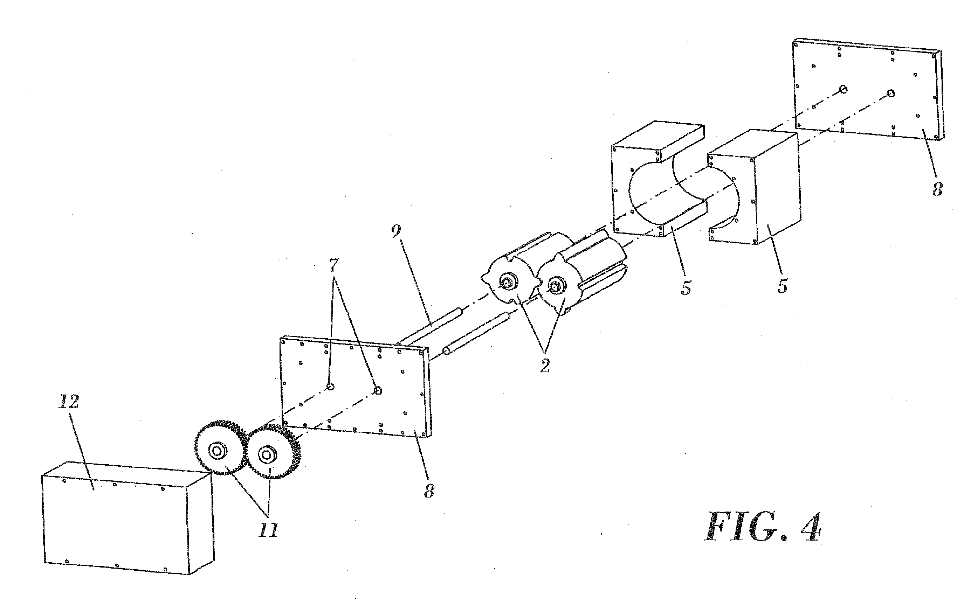

Figure 4 depicts an exploded image of a practical embodiment of the peripheral pump-turbine of the invention.

### Preferred Embodiment of the Invention

In view of the mentioned drawings and according to the adopted numbering, two preferred embodiments of the invention can be observed therein, which comprises the portions and elements indicated and described in detail below, the common portions and elements being referred to with the same numerical references.

Therefore, as seen in said drawings the peripheral pump-turbine (1) in question consists of a mechanism made up of two wheels (2) meshed with one another, such that one moves the other in a synchronized manner, the wheels laterally incorporate two or more blades (3) fitting in matching recesses (4) arranged on their sides intercalated between said blades (3) in said meshed rotation.

These wheels (2) are housed inside a structure formed by the two front and rear frontal covers (8) and the intercalation of casings (5) strongly attached by means of screws. Since the casings (5) are shorter, the hole between both forms the fluid inlet and outlet.

The structure of the peripheral pump-turbine (1) is preferably formed by the two frontal covers (8) and the two casings (5) between them forming the pump body with the two semicircles where the two wheels (2) are included to perform their function of entraining the fluid. The two casings (5) leave the fluid intake and discharge openings (6) between them, the two frontal covers (8) being through which the shafts (9) of the wheels emerge and through which the movement is applied thereto.

The dimension of the openings (6) is defined by a length calculated as the sum of:
the horizontal projection of the distance between the centers of the wheels (2),
the product of the radius times the cosine of the semiangle formed by two consecutive blades (3) of one of the wheels (2),
the product of the radius times the cosine of the semiangle formed by two consecutive blades (3) of the other wheel (2).

In one embodiment of the peripheral pump-turbine (1) applicable for driving oil, the gear teeth (10) of the wheels (2) are incorporated therein, as shown in the example of Figure 1, arranged between the blades (3) and the recesses (4), therefore being impregnated with the pumped oil inside the casings (5).

In an alternative embodiment in which the fluid to be driven is water, the wheels (2) mesh by means of respective pinions (11) integrally coupled to the shafts (9) thereof and located in the outer portion of the casing (5), such as observed in the exploded view of Figure 4, in this case the wheels (2) lack teeth (10) as observed in Figures 2 and 3.

Figures 2 and 3 depict respective schematic side elevational views of respective embodiments of the peripheral pump-turbine (1) according to the invention, in this case having two and three blades (3) and without meshing with one another by means of pinions outside the casing (5). The embodiment with two blades (3) in each wheel (2) and how they are diametrally separated by 180º and how the casing (5) makes an angle of 180º which is exactly the separation between two blades (3) are therefore observed in Figure 2.

Figure 3 shows an embodiment with three blades (3) in each wheel and how they are spaced at an angle of 120º, that being the angle of the casings (5) so that the blades (3) at the end position close the ends of the casings (5).

An exploded image of the peripheral pump-turbine (1) is observed in Figure 4, where the frontal covers (8) and how the casings (5) are located between the covers and the wheels (2) with the blades (3) and recesses (4) are located inside the casings can be seen. The shafts (9) of the wheels (2) traverse the frontal covers (8) through the orifices (7) and there would be placed on the outside the pinions (11) meshed with one another which would be enclosed by a cover (12) the inside of which would retain the lubricating fluid which would facilitate the correct operation of the gears.

Having sufficiently described the nature of the present invention as well as the manner of carrying it out into practice, making a more extensive explanation so that any person skilled in the art can understand its scope and the advantages derived therefrom is not considered necessary, stating that, within its essential nature it could be carried out into practice in other embodiments differing in detail from that indicated by way of example, which embodiments will also achieve the protection sought provided that their essential principle is not altered, changed or modified.

## Claims

1. Peripheral pump-turbine (1) formed by a mechanism of the type which drives a fluid, **characterized in that** it comprises two wheels (2) meshed with one another such that one moves the other in a synchronized manner, the wheels laterally incorporate two or more blades (3) fitting in matching recesses (4) arranged on their sides intercalated between said blades (3) in said meshed rotation, said wheels (2) being housed inside casings (5) between which respective openings (6) for the intake and discharge of fluid are formed.

2. Peripheral pump-turbine (1) according to the preceding claim, **characterized in that** the dimension of the openings (6) is defined by a length calculated as the sum of:
the horizontal projection of the distance between the centers of the wheels (2),
the product of the radius times the cosine of the semiangle formed by two consecutive blades (3) of one of the wheels (2),
the product of the radius times the cosine of the semiangle formed by two consecutive blades (3) of the other wheel (2).

3. Peripheral pump-turbine (1) according to any of the preceding claims, **characterized in that** the casings (5) partially cover the upper and lower portion of the wheels (2) with blades, thus determining the mentioned fluid intake and discharge openings (6), laterally demarcated by two front and rear frontal covers (8), through which the shafts (9) of the wheels (2) emerge and through which the movement is applied thereto.

4. Peripheral pump-turbine (1) according to any of the preceding claims, **characterized in that** in one applicable embodiment for driving oil, the wheels (2) incorporate teeth (10) to allow the meshing thereof, the teeth being incorporated therein arranged between the blades (3) and the recesses (4).

5. Peripheral pump-turbine (1) according to any of claims 1 to 3, **characterized in that** in an applicable embodiment for driving water, the wheels (2) mesh by means of respective pinions (11) which are duly lubricated and enclosed in a compartment, integrally coupled to the shafts (9) thereof and located in the outer portion of the casing (5).

6. Peripheral pump-turbine (1) according to any of the preceding claims, **characterized in that** the angle of separation of the blades (3) of each wheel (2) determines the angle of contact of the casings (5) with respect to the wheels (2).
